(19) **Europäisches Patentamt / European Patent Office / Office européen des brevets**

(11) **EP 3 615 889 B1**

(12) **FASCICULE DE BREVET EUROPEEN**

(45) Date de publication et mention de la délivrance du brevet:
**02.06.2021 Bulletin 2021/22**

(21) Numéro de dépôt: **18720332.8**

(22) Date de dépôt: **13.04.2018**

(51) Int Cl.:
***G01C 19/5719*** *(2012.01)*

(86) Numéro de dépôt international:
**PCT/FR2018/050940**

(87) Numéro de publication internationale:
**WO 2018/197777 (01.11.2018 Gazette 2018/44)**

(54) **RÉSONATEUR CONFIGURÉ POUR ÊTRE INTÉGRÉ À UN CAPTEUR ANGULAIRE INERTIEL**

RESONATOR MIT KONFIGURATION ZUR INTEGRATION IN EINEN TRÄGHEITSWINKELSENSOR

RESONATOR CONFIGURED TO BE INTEGRATED INTO AN INERTIAL ANGLE SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.04.2017 FR 1753688**

(43) Date de publication de la demande:
**04.03.2020 Bulletin 2020/10**

(73) Titulaires:
• **Safran**
  **75015 Paris (FR)**
• **Commissariat à l'Énergie Atomique et aux Énergies Alternatives**
  **75015 Paris (FR)**

(72) Inventeurs:
• **ONFROY, Philippe Serge Claude**
  **77550 Moissy-Cramayel (FR)**
• **RAGOT, Vincent**
  **77550 Moissy-Cramayel (FR)**

(74) Mandataire: **Ernest Gutmann - Yves Plasseraud S.A.S.**
**66, rue de la Chaussée d'Antin**
**75009 Paris (FR)**

(56) Documents cités:
**EP-A2- 0 141 621        US-A1- 2004 199 347**
**US-A1- 2016 341 551**

EP 3 615 889 B1

**Description**

DOMAINE

La présente invention concerne le domaine des capteurs angulaires inertiels vibrants tels qu'un gyromètre ou un gyroscope, et plus particulièrement des capteurs micro-électromécaniques ou MEMS (micro electro-mechanical system en anglais).

CONTEXTE

Les capteurs angulaires inertiels vibrants de type MEMS sont généralement classés en deux familles selon la nature du résonateur. Un résonateur est une structure physique ayant une résonance mécanique à une fréquence dite fréquence de résonance.

Dans la première famille, le résonateur est un corps déformable, généralement de révolution (anneau, cylindre, hémisphère, disque). Dans la deuxième famille, le résonateur est constitué d'une ou plusieurs masses indéformables reliées à un support par des éléments élastiques. La présente invention porte tout particulièrement sur un résonateur appartenant à la deuxième famille, et se présentant donc sous forme d'un système masse/ressort.

Un capteur angulaire inertiel comprend généralement des actionneurs agencés pour mettre le résonateur en vibration à une fréquence de résonance donnée, et des détecteurs des déformations du résonateur. Les actionneurs et les détecteurs de déformations sont généralement montés entre le résonateur et le support.

Un capteur angulaire inertiel de type MEMS permet de mesurer une vitesse angulaire (mode gyromètre) ou une position angulaire (mode gyroscope).

Pour obtenir un capteur inertiel performant, il est important que les caractéristiques du résonateur soient isotropes, c'est-à-dire qu'elles soient identiques quelle que soit l'orientation de la vibration du résonateur. Autrement dit, il n'y a pas de défaut de mesure dépendant de la position angulaire de la vibration.

Si l'on prend l'exemple d'un gyroscope dont le résonateur présente deux modes propres dont les orientations de la vibration sont à 90 degrés, lorsqu'une rotation est appliquée au support du résonateur, le mouvement relatif de la vibration par rapport au résonateur est exactement l'opposé de cette rotation. Pour améliorer la précision d'un tel gyroscope, les caractéristiques de raideur et d'amortissement du résonateur doivent être isotropes, c'est à dire uniformes dans toutes les directions.

Pour des réalisations classiques de capteurs de type MEMS, les précisions d'usinage des résonateurs ne sont pas suffisantes pour obtenir l'isotropie de raideur requise. Par exemple, pour un résonateur dont la fréquence est de l'ordre de $10kHz$, l'anisotropie de fréquence obtenue peut atteindre $\pm1\%$, soit $\pm100Hz$, alors que le besoin fonctionnel pour la réalisation d'un gyroscope vibrant précis nécessite une anisotropie très inférieure à $\pm1Hz$.

Un objectif consiste à proposer une solution de correction de l'anisotropie de fréquence d'un résonateur à masse suspendue permettant d'obtenir un gyroscope vibrant performant.

Un résonateur à masse suspendue est un type de résonateur connu dans le domaine des MEMS. Il comprend au moins un système masse/ressort possédant deux modes propres orthogonaux dont les fréquences de vibration sont proches, permettant de mesurer les rotations d'axe perpendiculaire au plan de vibration de la masse. La masse suspendue présente trois degrés de liberté dont deux translations et une rotation.

La demande brevet français FR 2 983 574 propose une solution permettant d'équilibrer un capteur angulaire inertiel vibrant tel qu'un gyroscope vibrant en rendant plus stable l'anisotropie d'amortissement du résonateur. Le résonateur décrit comprend deux masses concentriques de formes annulaires carrées. L'équilibrage repose sur la correction du balourd dynamique résultant du déplacement du centre de gravité global des masses à la fréquence de vibration. La correction est obtenue grâce à une structure mécanique particulière du capteur angulaire inertiel et un ajustement individuel des raideurs des ressorts électrostatiques. Les ressorts électrostatiques utilisés ont des directions d'action perpendiculaires aux cotés des masses ce qui ne permet pas une compensation de l'anisotropie de fréquence dans toutes les directions

Le document US 2016/341551 A1 divulgue un gyroscope comprenant une ancre centrale, une pluralité de liaisons souples internes, une pluralité de masses, chacune étant couplée à l'ancre centrale via au moins une de la pluralité de liaisons souples internes et configurée pour se translater dans un plan du gyroscope, et une pluralité de coupleurs, chacun étant couplé entre deux masses adjacentes de la pluralité de masses, et une pluralité de transducteurs, chacun étant configuré pour effectuer au moins l'un des mouvements d'entraînement et de détection d'une des masses, dans lequel la pluralité de transducteurs est configurée pour entraîner la pluralité de masses dans au moins un premier mode vibratoire et un second mode vibratoire.

RESUME

La présente invention propose une solution permettant de rendre le résonateur isotrope en raideur dans toutes les directions, et ce par un réglage essentiellement électrique et non mécanique, rendant cette solution avantageusement applicable à des capteurs angulaires inertiels pouvant présenter des structures mécaniques et des formes variables.

La présente invention porte sur un résonateur configuré pour être intégré à un capteur angulaire inertiel, ledit résonateur comprenant au moins une masse suspendue par des ressorts mécaniques et possédant un nombre N de paires $P_i$ ($2 \leq i \leq N$) de ressorts électrostatiques, ledit résonateur possédant au moins quatre axes de symétrie $S_1, S_2, S_3$ et $S_4$, et présentant les caractéristiques suivantes :

- chaque paire $P_i$ est constituée de deux ressorts électrostatiques ayant chacun un axe **D** privilégié d'action, ces ressorts électrostatiques étant placés de telle sorte que leurs axes **D** respectifs forment un angle droit,
- pour au moins un ressort électrostatique d'une des paires et un ressort électrostatique d'une autre paire, l'angle formé par ces deux ressorts électrostatiques est égal à un angle prédéfini.

Le résonateur peut également comporter une ou plusieurs des caractéristiques suivantes :

- l'angle prédéfini est préférentiellement de 45 degrés,
- chaque paire $P_i$ est symétrique d'au moins une autre paire $P_j$ (avec $j \neq i$) par rapport à au moins l'un des axes de symétrie $S_1, S_2, S_3, S_4$ du résonateur,
- chaque ressort électrostatique forme un angle alpha=90/N degrés avec au moins deux des quatre axes de symétrie $S_1, S_2, S_3$ et $S_4$ du résonateur.
- dans le cas où N est strictement supérieur à deux, chaque ressort de chaque paire $P_i$ est symétrique d'au moins deux ressorts d'autres paires, respectivement par rapport à l'un des axes de symétries $S_1, S_2, S_3, S_4$ du résonateur,
- dans le cas où N est strictement supérieur à deux, chaque paire $P_i$ est symétrique de deux autres paires $P_j, P_k$ (avec $j \neq i$, $k \neq i$, et $k \neq j$) respectivement par rapport à deux des axes de symétries $S_1, S_2, S_3, S_4$ du résonateur,
- dans le cas où N est strictement supérieur à deux, chaque ressort de chaque paire $P_i$ est symétrique de quatre ressorts d'autres paires, respectivement par rapport à l'un des axes de symétries $S_1, S_2, S_3, S_4$ du résonateur.

L'invention propose en deuxième lieu un capteur angulaire inertiel comprenant un support, et un résonateur tel que décrit ci-dessus dont l'au moins une masse est reliée au support par les **N** paires de ressorts électrostatiques et par des ressorts mécaniques.

Le capteur angulaire inertiel peut comporter une ou plusieurs des caractéristiques suivantes :

- le capteur angulaire inertiel comprend une masse intérieure et une masse extérieure couplées entre elles par des ressorts de couplage, ces masses étant chacune reliée au support par des ressorts mécaniques, et chacune reliée au support par un nombre **N** de ressorts électrostatiques.
- la masse extérieure est de forme annulaire sensiblement carrée.
- les masses intérieure et extérieure ont les mêmes axes de symétrie.

L'invention propose en troisième lieu un procédé de correction de la raideur d'un résonateur intégré dans un capteur angulaire inertiel tel que décrit ci-dessus comprenant des étapes de :

- mesure des fréquences de vibration du résonateur pour différentes orientations de la vibration, au moyen de capteurs de déformations,
- détermination, à partir de ces mesures, du défaut de raideur $K_U$ du résonateur,
- calcul à partir du défaut de raideur $K_U$, des tensions à appliquer sur une sélection de ressorts,
- application des tensions calculées sur la sélection de ressorts,
- réitération des étapes précédentes si l'anisotropie de fréquence de vibration du résonateur est supérieure à une valeur d'anisotropie de fréquence seuil.

Selon un mode préféré de réalisation de ce procédé, la valeur d'anisotropie de fréquence seuil est de 1Hz.
L'invention sera mieux comprise et d'autres détails, caractéristiques et avantages de l'invention apparaîtront à la lecture de la description suivante faite à titre d'exemple non limitatif en référence aux dessins.

BREVE DESCRIPTION DES DESSINS

La **FIG.1** est un exemple de résonateur à masse suspendue.

La **FIG.2** est une illustration sous forme de schéma simplifié d'un ressort électrostatique.

La **FIG.3** est une illustration d'un exemple de mode de réalisation de l'invention avec quatre ressorts électrostatiques.

La **FIG.4** est une illustration d'un motif formé par huit ressorts électrostatiques, selon un exemple de mode de réalisation de la présente invention.

La **FIG.5** est une illustration d'un résonateur à masse suspendue selon un exemple de mode de réalisation de la présente invention.

La **FIG.6** est une illustration d'un résonateur à masse suspendue selon un exemple de mode de réalisation de la présente invention.

La **FIG.7** est une illustration d'un capteur inertiel équipé d'un résonateur selon un exemple de mode de réalisation.

La **FIG.8** est une illustration d'un capteur inertiel équipé d'un résonateur selon un exemple de mode de réalisation.

## DESCRIPTION DETAILLEE

La présente invention porte sur un résonateur **1** destiné à être intégré dans un capteur angulaire inertiel **2,** par exemple de type MEMS.

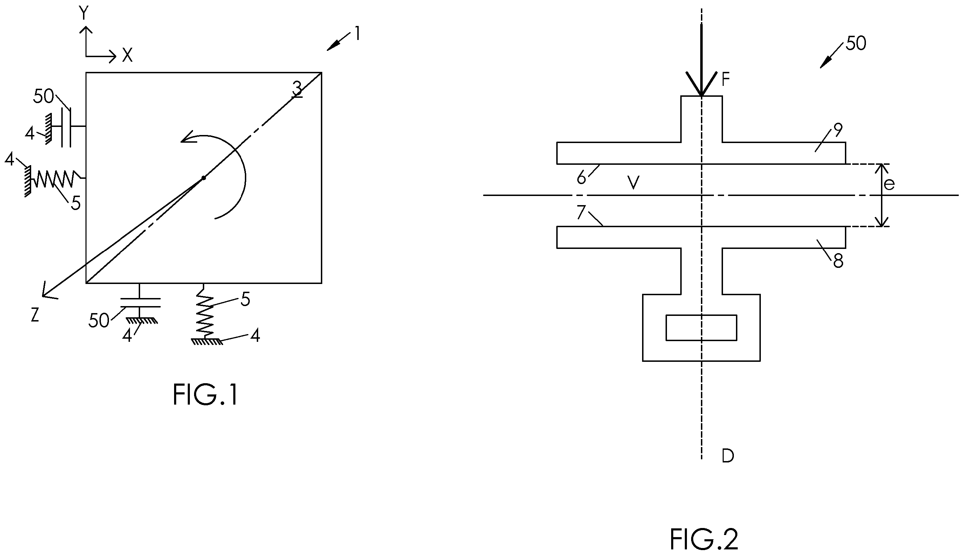

Nous nous référons dans un premier temps à la **FIG.1** illustrant un exemple de résonateur à masse **3** suspendue sur un support **4.** Celui-ci comprend au moins une masse **3** vibrante suspendue au moyen d'au moins deux ressorts mécaniques **5** orthogonaux. La masse **3** suspendue présente trois degrés de liberté soit deux translations sur les axes **X** et **Y** et une rotation autour de l'axe **Z** orthogonal aux axes **X** et **Y.** A tout ressort mécanique correspond une certaine raideur.

En parallèle des ressorts mécaniques 5, sont placés des ressorts électrostatiques **50** dont le principe de fonctionnement est donné en **FIG.2.**

La **FIG.2** est une illustration sous forme de schéma simplifié d'un ressort électrostatique. Comme illustré dans la **FIG.2,** un ressort électrostatique est constitué d'au moins deux surfaces parallèles **6** et **7** formées par une électrode fixe **8** et une électrode mobile **9** dont l'entrefer **e,** c'est à dire l'interstice entre les deux surfaces, varie sous l'effet de la vibration. Le déplacement de l'électrode mobile se fait suivant un axe de déformation privilégié **D** du ressort **50.** Une attraction électrostatique entre les deux surfaces **6** et **7** se manifeste par une force électrostatique **F** appliquée sur l'électrode mobile **9.** Une tension continue **V** est appliquée entre les deux surfaces. Cette tension **V** génère une raideur négative qui s'additionne à la raideur mécanique du ressort mécanique de façon à constituer la raideur totale du ressort équivalent.

Le ressort **50** représenté dans la **FIG.2** est une version simplifiée. En effet, les électrodes **8** et **9** peuvent également avoir une forme de peignes inter-digités en silicium par exemple. Le principe de fonctionnement reste le même que précédemment.

Un objectif de la présente invention est de contrôler la fréquence de la vibration du résonateur **1** par un ajustement des raideurs des ressorts électrostatiques **50.**

Une analyse théorique montre que le défaut de raideur $K_U$ d'un résonateur constitué d'une masse suspendue tel que représenté en FIG.1 est une fonction dont la variable est le double de la position angulaire $\theta$ de la vibration, mesurée autour de l'axe perpendiculaire au plan dans lequel se déplace la masse **3.** Cette fonction est illustrée par l'équation (1) :

$$K_U(\theta) = k(1 + \delta k \cos(2\theta)) \qquad\qquad (1)$$

Où $\delta k$ est le demi écart relatif des raideurs $K_x$ -raideur dans la direction X- et $K_y$ -raideur dans la direction Y;$k$ est la valeur moyenne des raideur $K_x$ et $K_y$.

Dans les cas particulier où $\theta$ vaut 0 degrés, le défaut de raideur $K_U$ peut être exprimé par l'équation (2), et dans le cas où $\theta$ vaut 90 degrés, $K_U$ peut être exprimé par l'équation (3):

$$K_U(0) = k(1 + \delta k) = K_x \qquad\qquad (2)$$

$$K_U(90) = k(1 - \delta k) = K_y \qquad\qquad (3)$$

L'angle $\theta$ est l'angle entre la direction de déplacement de la masse **3** et l'axe X du plan (X,Y) dans lequel se déplace la masse **3.** Il permet de définir l'orientation initiale du défaut de raideur $K_U$.

Les défauts d'orientation des ressorts mécaniques **5** de la FIG.1 et/ou l'utilisation de ressorts **5** sur deux axes introduisent une composante sin(2θ).

Les ressorts électrostatiques **50** doivent donc être positionnés sur le résonateur **1** de façon à pouvoir compenser le défaut de raideur quelle que soit son orientation initiale, donc quel que soit l'angle θ. Cela conduit à la nécessité de pouvoir compenser à la fois les composantes cosinus cos(2θ) et sinus sin(2θ) du défaut de raideur $K_U$. La raideur $K_U$ étant une fonction de variable 2θ, le passage d'une composante cosinus à une composante sinus est réalisé par une rotation physique de 45 degrés.

Or, les ressorts électrostatiques **50** ne permettent de créer que des raideurs négatives. Pour cette raison, au moins une paire **P** de ressorts électrostatiques **50** dont les axes de déformation forment un angle droit est nécessaire pour augmenter ou diminuer la raideur $K_x$ ou $K_y$.

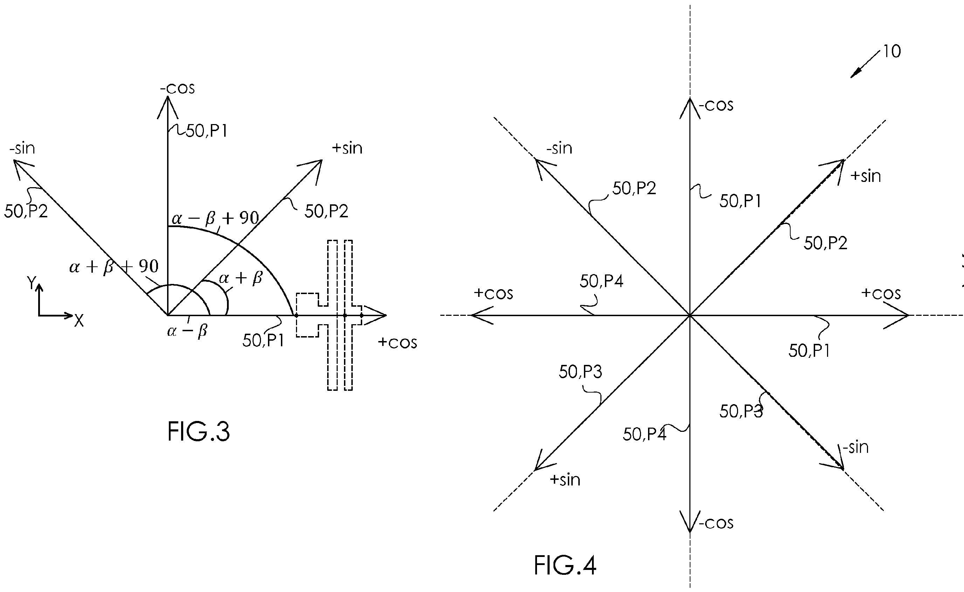

La **FIG.3** est une illustration d'un exemple de mode de réalisation d'un résonateur avec quatre ressorts électrostatiques. Dans le cas de la **FIG.3,** le résonateur **2** comprend deux paires de ressorts électrostatiques **50** décalées d'un angle différent de 0 et 90 degrés par rapport à l'axe X, soit deux paires $P_1$ et $P_2$ de ressorts électrostatiques **50** décalés deux à deux par exemple de 45 degrés, chaque paire étant constituée de deux ressorts **50** dont les axes privilégiés **D** d'action forment un angle droit, comme l'illustre la **FIG.3.** Pour simplifier la représentation des ressorts **50** dans leurs positions et orientations respectives, chaque ressort **50** est représenté par une flèche. Cette configuration permet des compensations indépendantes des composantes sinus et cosinus. Il est prévu de pouvoir utiliser quatre ressorts électrostatiques dont chacun forme respectivement un angle $\alpha - \beta$, $\alpha + \beta$, $\alpha - \beta + 90$ et $\alpha + \beta + 90$ avec l'axe X, avec $0 < \beta \le 45$. Cette configuration permet une compensation de l'anisotropie de fréquence dans toutes les directions.

Dans le cas particulier de la **FIG.3,** $\alpha$ et $\beta$ valent chacun 22,5 degrés. La valeur de $\beta$ n'est pas imposée mais 22,5 degrés constitue une valeur optimale permettant d'avoir une compensation de l'anisotropie de fréquence dans toutes les directions, et est un paramètre préféré.

Au bout de chaque flèche, sont indiquées la nature de la composante compensée (-cos pour une composante cosinus négative, +cos pour une composante cosinus positive, -sin pour une composante sinus négative, +sin pour une composante sinus positive).

Dans cette **FIG.3,** on a volontairement représenté en pointillés le ressort **50** de la paire $P_1$ compensant une composante cosinus positive, pour montrer sa position et son orientation correspondantes à sa représentation sous forme de flèche.

Pour un résonateur **1** donné, on peut définir, selon sa forme un nombre fini d'axes de symétrie et par exemple quatre axes de symétrie notés $S_1, S_2, S_3$ et $S_4$. Ces axes de symétrie sont confondus avec les axes de symétrie de la ou des masses du résonateur.

Pour des raisons de symétrie, la présente invention prévoit l'utilisation d'un nombre **N** de paires $P_i$ ($N \ge 2, 1 \le i \le N$) de ressorts **50** suivant la forme du résonateur **1,** régulièrement espacés d'un angle identique. Un exemple de réalisation comportant avantageusement huit ressorts électrostatiques **50** est illustré dans les **FIG.4, FIG.5** et **FIG.6,** correspondant à quatre paires notées $P_1$, $P_2$, $P_3$ et $P_4$.

La **FIG.4** est une illustration d'un motif formé par huit ressorts électrostatiques, selon un exemple de mode de réalisation de la présente invention. Selon ce mode de réalisation, les huit ressorts électrostatiques **50** sont espacés de 45 degrés et définissent ensemble un motif **10** dont l'orientation par rapport aux axes de symétrie $S_1, S_2, S_3$ et $S_4$ du résonateur **1** est libre, ce qui conduit à un grand nombre de topologies possibles.

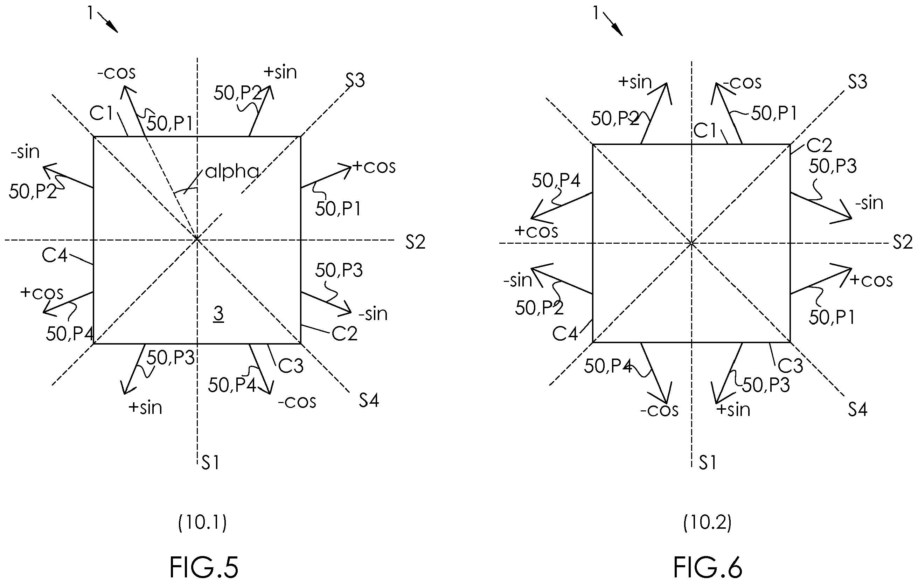

Pour un résonateur dont la forme est carrée, comme l'illustre la **FIG.5,** une orientation préférentielle est obtenue en tournant le motif de la **FIG.4** d'un angle de 22,5 degrés, ce qui conduit à un angle constant de 22,5 degrés entre chaque ressort électrostatique **50** et deux des quatre axes de symétrie ($S_1, S_2, S_3$ et $S_4$) du résonateur **1.** Dans la **FIG.5,** les ressorts électrostatiques **50** définissent un motif noté **10.1.** Dans cette configuration, les ressorts **50** sont positionnés de telle sorte qu'ils puissent être regroupés en un nombre **N** de paires $P_i$ (où $N \ge 2$, $21 \le i \le N,$) de ressorts **50** dont les axes privilégiés **D** d'action forment un angle droit, et de tel sorte que chaque ressort **50** forme un angle de 90/N degrés avec au moins deux des axes de symétrie du résonateur 1.

D'autre part, à partir du motif **10.1** de la **FIG.5,** il est possible de permuter -pour chacun des côtés $C_1$, $C_2$, $C_3$ et $C_4$ du résonateur **1**- deux ressorts **50,** ce qui conduit au motif **10.2** de la **FIG.6.** Le motif **10.2** est défini par l'ensemble des ressorts électrostatiques **50** de la **FIG.6.** Chaque motif **10.1** et **10.2** fournit une topologie des ressorts **50,** indiquant leurs positions et orientations relatives.

Ainsi, le résonateur **1** comprend au moins une masse **3,** un nombre **N** de paires $P_i$ ($N \ge 2, 1 \le i \le N$) de ressorts électrostatiques **50,** et au moins quatre axes de symétrie $S_1, S_2, S_3$ et $S_4$. Dans les exemples de réalisation illustrés dans les **FIG.5** et **FIG.6, N** vaut quatre (**N=4**).

Les modes de réalisation du résonateur **1,** illustrés dans les **FIG.5** et **FIG.6** présentent les caractéristiques communes suivantes :

- chaque paire $P_i$ est constituée de deux ressorts électrostatiques **50** ayant chacun un axe **D** privilégié d'action, ces ressorts électrostatiques **50** étant placés de telle sorte que leurs axes **D** respectifs forment un angle droit,
- pour au moins un ressort d'une des paires et un ressort d'une autre paire, l'angle formé par ces deux ressorts est égal à un angle prédéterminé, et par exemple de 45 degrés.

- chaque paire $P_i$ est symétrique d'au moins une autre paire $P_j$ (avec $j \neq i$) par rapport à au moins l'un des axes de symétrie $S_1,S_2,S_3,S_4$ du résonateur **1**,
- chaque ressort **50** de chaque paire $P_i$ est symétrique d'au moins deux ressorts **50** d'autres paires, respectivement par rapport à l'un des axes de symétries $S_1,S_2,S_3,S_4$ du résonateur **1**.

Le mode de réalisation du résonateur **1**, présenté en **FIG.5** présente les caractéristiques particulières suivantes :

- chaque paire $P_i$ est symétrique de deux autres paires $P_j,P_k$ (avec $j \neq i$, $k\,j \neq i$, et $k \neq j$) respectivement par rapport à deux des axes de symétries $S_1,S_2,S_3,S_4$ du résonateur **1**,
- chaque ressort **50** de chaque paire $P_i$ est symétrique de quatre ressorts **50** d'autres paires, respectivement par rapport à l'un des axes de symétries $S_1,S_2,S_3,S_4$ du résonateur **1**.
- chaque ressort **50** de chaque paire $P_i$ forme un angle alpha=90/N degrés avec au moins deux des quatre axes de symétrie du résonateur **1**.

Les modes de réalisation du résonateur **1** présentés en **FIG.5** et **FIG.6** permettent une compensation tous azimuts (dans toutes les directions) de l'anisotropie de fréquence du résonateur **1**. La présente invention prévoit également un capteur angulaire inertiel **2** équipé d'un résonateur **1** tel que décrit précédemment. Ce capteur angulaire inertiel **2** comprend un support **4**, et un résonateur **1** dont la/les masse(s) **3** est/sont reliée(s) au support par les **N** paires de ressorts électrostatiques et par des ressorts mécaniques **5**.

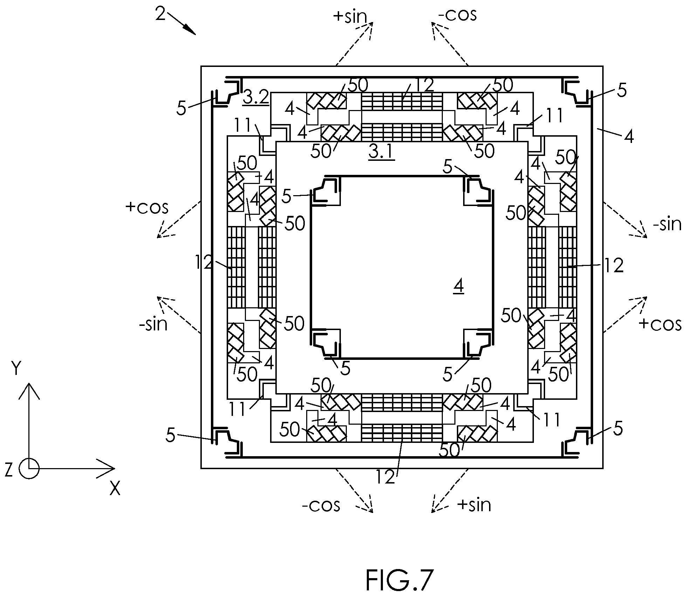

Selon un mode de réalisation illustré en **FIG.7**, le capteur **2** comporte deux masses concentriques **3.1** (masse intérieure) et **3.2** (masse extérieure) chacune reliée par des ressorts mécaniques **5** - chacun constitué ici de deux lames flexibles positionnées à 90 degrés-à un support **4**. Des ressorts de couplage **11** relient les deux masses **3.1** et **3.2** entre elles. Des ressorts électrostatiques **50** sont montés entre chaque masse **3.1** et **3.2** et le support **4**. Chaque masse **3.1** et **3.2** dispose de trois degrés de liberté dans le plan, à savoir deux translations selon les axes **X** et **Y** et une rotation selon un axe normal au plan formé par les axes **X** et **Y**.

Les masses **3.1** et **3.2** ont des axes de symétrie confondus, formant les axes de symétrie $S_1,S_2,S_3,S_4$ du capteur **2**, lesdites masses possédant des fréquences propres identiques. Un mode de vibration utilisé correspond à des déplacements en opposition des deux masses. Cette vibration peut avoir une orientation quelconque. Pour chacune des masses **3.1** et **3.2**, une topologie de ressorts électrostatiques **50** telle que celle décrite par le motif **10.2** de la **FIG.6** a été utilisée.

Dans l'exemple de mode de réalisation de la **FIG.7**, il y a quatre paires de ressorts électrostatiques **50** pour chaque masse suspendue **3.1** et **3.2**. Selon un mode préféré de réalisation, les masses **3.1** et **3.2** sont de formes annulaires sensiblement carrées. Cependant, cela n'est pas une obligation pour la masse intérieure **3.1** qui peut être carrée et pleine.

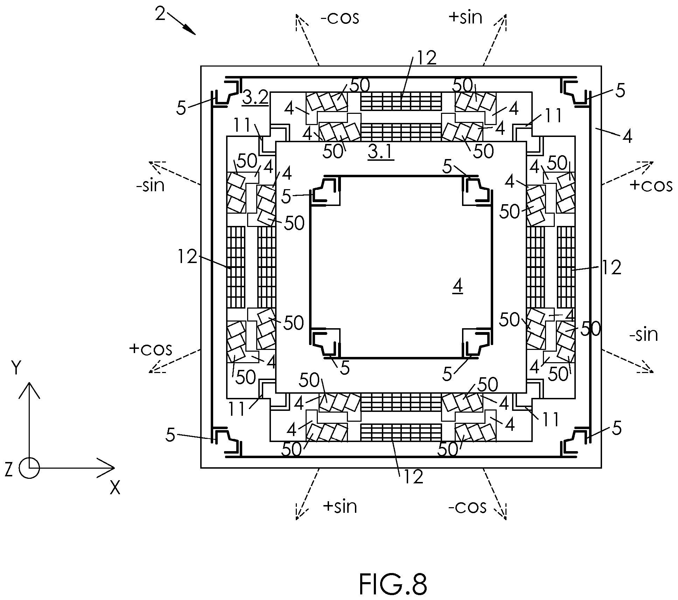

Dans la **FIG.8**, est représenté un autre mode de réalisation d'un capteur angulaire inertiel **2** dans lequel la topologie de ressorts électrostatiques **50** utilisée est décrite par le motif **10.1** de la **FIG.5**. Par ailleurs, il est possible, selon un autre mode de réalisation possible, d'employer une topologie de ressorts défini par un motif différent pour chaque masse **3.1** et **3.2**, par exemple le motif **10.1** pour la masse **3.1** et le motif **10.2** pour la masse **3.2** ou l'inverse.

Dans le mode de réalisation du capteur **2** de la **FIG.7**, le résonateur **1** comprend deux systèmes masses/ressorts, le premier système comprenant la masse **3.1** et des ressorts mécaniques **5 associés,** et le deuxième système comprenant la masse **3.2** et des ressorts mécaniques **5** associés.

Les ressorts électrostatiques **50** peuvent avantageusement présenter une structure sous forme d'électrodes en peignes dont les dents sont intercalées les unes entre les autres. Les peignes des ressorts électrostatiques **50** ont un mode de fonctionnement à entrefer variable.

La présente invention prévoit également un procédé de correction de la raideur du résonateur **1** intégré dans un capteur angulaire inertiel tel que décrit précédemment, et comportant les étapes de :

- mesure de la fréquence de vibration du résonateur pour différentes orientations de la vibration, au moyen de capteurs **12** de déformation placés entre les blocs de ressorts électrostatiques **50**, comme illustré dans les **FIG.7** et **FIG.8**.
- détermination, à partir de ces mesures, de l'amplitude de l'anisotropie et de son orientation, i.e. le défaut de raideur $K_U$ du résonateur,
- calcul des tensions à appliquer sur certains ressorts pour compenser les composantes sinus et cosinus du défaut de raideur du résonateur,
- si l'anisotropie de fréquence de vibration du résonateur est supérieure à une valeur prédéterminée, préférentiellement de 1Hz, les étapes précédentes sont réitérées.

La procédure ci-dessus permet de rendre isotrope en raideur, par un réglage électrique et non un réglage mécanique un résonateur **1** destiné à être intégré dans un capteur angulaire inertiel **2** sous forme d'un système masses/ressorts.

**Revendications**

1. Capteur angulaire inertiel (2) comprenant un support (4), **caractérisé en ce qu'**il comprend un résonateur (1), ledit résonateur (1) comprenant au moins deux masses (3) suspendues par des ressorts mécaniques (5), un nombre N de paires $P_i$ ($2 \leq i \leq N$) de ressorts électrostatiques (50), ledit résonateur (1) définissant au moins quatre axes de symétrie $S_1, S_2, S_3$ et $S_4$, configuré tel que :

   - chaque paire $P_i$ est constituée de deux ressorts électrostatiques **(50)** ayant chacun un axe **D** privilégié d'action, ces ressorts électrostatiques **(50)** étant placés de tel sorte que leurs axes **D** respectifs forment un angle droit,
   - pour au moins un ressort d'une quelconque des paires et au moins un ressort d'une quelconque autre paire, l'angle formé par ces deux ressorts est égal à un angle prédéfini,

   lesdites au moins deux masses (3) étant reliées au support par les au moins une partie des N paires de ressorts électrostatiques (50) et par au moins une partie des ressorts mécaniques (5), **caractérisé en ce que** lesdites au moins deux masses du résonateur comprennent une masse intérieure (3.1) et une masse extérieure (3.2) couplées entre elles par des ressorts de couplage (11), chaque masse (3.1,3.2) étant reliée au support (4) par des ressorts mécaniques (5), et chaque masse (3.1,3.2) étant reliée au support (4) par N des ressorts électrostatiques (50).

2. Capteur angulaire inertiel (2) selon la revendication 1, **caractérisé en ce que** l'angle prédéfini est de 45 degrés.

3. Capteur angulaire inertiel (2) selon l'une des revendications précédentes, **caractérisé en ce que** chaque paire $P_i$ est symétrique d'au moins une autre paire $P_j$ (avec $j \neq i$) par rapport à au moins l'un des axes de symétrie $S_1, S_2, S_3, S_4$ du résonateur (1).

4. Capteur angulaire inertiel (2) selon l'une des revendications précédentes, **caractérisé en ce que** chaque ressort (**50**) de chaque paire $P_i$ forme un angle alpha=90/N degrés avec au moins deux des quatre axes de symétrie $S_1, S_2, S_3$ et $S_4$ du résonateur (**1**).

5. Capteur angulaire inertiel (2) selon l'une des revendications 1 à 4, **caractérisé en ce que** la masse extérieure **(3.2)** est de forme annulaire sensiblement carrée.

6. Capteur angulaire inertiel **(2)** selon l'une des revendications 1 à 5, **caractérisé en ce que** les masses **(3.1)** et **(3.2)** ont les mêmes axes de symétrie.

7. Procédé de correction de la raideur d'un résonateur **(1)** intégré dans un capteur angulaire inertiel **(2)** selon l'une des revendications 1 à 6, comprenant des étapes de :

   - mesure des fréquences de vibration du résonateur **(1)** pour différentes orientations de la vibration, au moyen de capteurs **(12)** de déformations,
   - détermination, à partir de ces mesures, du défaut de raideur $K_U$ du résonateur **(1),**
   - calcul à partir du défaut de raideur $K_U$, des tensions à appliquer sur une sélection de ressorts **(50),**
   - application des tensions calculées sur la sélection de ressorts **(50),**
   - réitération des étapes précédentes si l'anisotropie de fréquence de vibration du résonateur (1) est supérieure à une valeur d'anisotropie de fréquence seuil.

8. Procédé selon la revendication 7, **caractérisé en ce que** la valeur d'anisotropie de fréquence seuil est de 1Hz.

**Patentansprüche**

1. Trägheitswinkelsensor (2) mit einem Träger (4), **dadurch gekennzeichnet, dass** er einen Resonator (1) umfasst, wobei der Resonator (1) mindestens zwei durch mechanische Federn (5) aufgehängte Massen (3) und eine Anzahl N von Paaren $P_i$ ($2 \leq i \leq$ N) elektrostatischer Federn (50) umfasst, wobei der Resonator (1) mindestens vier Symmetrieachsen *S1,S2,S3* und S4 definiert, die so angeordnet sind, dass:

- jedes Paar $P_i$ aus zwei elektrostatischen Federn (50) mit jeweils einer bevorzugten Wirkungsachse D besteht, wobei die elektrostatischen Federn (50) so angeordnet sind, dass ihre jeweiligen Achsen D einen rechten Winkel bilden,

- bei mindestens einer Feder eines der Paare und mindestens einer Feder eines anderen Paares der durch diese beiden Federn gebildete Winkel gleich einem vordefinierten Winkel ist, wobei die mindestens zwei Massen (3) durch mindestens einen Teil der N Paare elektrostatischer Federn (50) und durch mindestens einen Teil der mechanischen Federn (5) mit dem Träger verbunden sind, **dadurch gekennzeichnet, dass** die mindestens zwei Massen des Resonators eine innere Masse (3.1) und eine äußere Masse (3.2) umfassen, die durch Kopplungsfedern (11) aneinander gekoppelt sind, wobei jede Masse (3.1, 3.2) durch mechanische Federn (5) mit dem Träger (4) verbunden ist und jede Masse (3.1, 3.2) durch elektrostatische Federn (50) mit dem Träger (4) verbunden ist.

2. Trägheitswinkelsensor (2) nach Anspruch 1, **dadurch gekennzeichnet, dass** der vordefinierte Winkel 45 Grad beträgt.

3. Trägheitswinkelsensor (2) nach einem der vorhergehenden Ansprüche, **dadurch gekennzeichnet, dass** jedes Paar $P_i$ zu mindestens einem anderen Paar $P_j$ (mit $j \neq i$) relativ zu mindestens einer der Symmetrieachsen $S1, S2, S3, S4$ des Resonators (1) symmetrisch ist,

4. Trägheitswinkelsensor (2) nach einem der vorhergehenden Ansprüche, **dadurch gekennzeichnet, dass** jede Feder (50) jedes Paares $P_i$ mit mindestens zwei der vier Symmetrieachsen $S1, S2,$ $S3$ und $S4$ des Resonators (1) einen Winkel alpha=90/N Grad bildet.

5. Trägheitswinkelsensor (2) nach einem der Ansprüche 1 bis 4, **dadurch gekennzeichnet, dass** die äußere Masse (3.2) eine im Wesentlichen quadratische Ringform aufweist.

6. Trägheitswinkelsensor (2) nach einem der Ansprüche 1 bis 5, **dadurch gekennzeichnet, dass** die Massen (3.1) und (3.2) die gleichen Symmetrieachsen haben.

7. Verfahren zur Korrektur der Steifigkeit eines in einen Trägheitswinkelsensor (2) eingebauten Resonators (1) nach einem der Ansprüche 1 bis 6, das folgende Schritte umfasst:

   - die Messung der Schwingungsfrequenzen des Resonators (1) für verschiedene Schwingungsausrichtungen mittels Deformationssensoren (12),
   - anhand dieser Messungen die Bestimmung des Fehlers der Steifigkeit $K_U$ des Resonators (1),
   - anhand des Fehlers der Steifigkeit $K_U$ die Berechnung der auf eine Auswahl von Federn (50) anzuwendenden Spannungen,
   - die Anwendung der berechneten Spannungen auf die Auswahl von Federn (50),
   - die Wiederholung der vorhergehenden Schritte, falls die Schwingungsfrequenzanisotropie des Resonators (1) größer ist als ein Schwellenwert der Frequenzanisotropie.

8. Verfahren nach Anspruch 7, **dadurch gekennzeichnet, dass** der Schwellenwert der Frequenzanisotropie 1 Hz beträgt.

**Claims**

1. An inertial angular sensor (2) comprising a support (4), **characterised in that** it comprises a resonator (1), said resonator (1) comprising at least two masses (3) suspended by mechanical springs (5), a number N of pairs $\boldsymbol{P_i}$ ($2 \leq i \leq \boldsymbol{N}$) of electrostatic springs (50), said resonator (1) defining at least four $S_1, S_2, S_3$ and $S_4$ axes of symmetry, **characterised in that**:

   - each pair $\boldsymbol{P_i}$ consists of two electrostatic springs (50) each having a preferred axis of action D, these electrostatic springs (50) being positioned such that the respective axes D thereof form a right angle,
   - for at least one spring of any of the pairs and at least one spring of any other pair, the angle formed by these two springs is equal to a predefined angle,

   said at least two masses (3) being connected to the support by at least some of the N pairs of electrostatic springs (50) and by at least some of the mechanical springs (5), **characterised in that** said at least two masses of the resonator comprise an internal mass (3.1) and an external mass (3.2) coupled together by coupling springs (11), each mass (3.1, 3.2) being connected to the support (4) by mechanical springs (5), and each mass (3.1, 3.2) being connected to the support (4) by a number N of electrostatic springs (50).

2. The inertial angular sensor (2) according to claim 1, **characterised in that** the predefined angle is 45 degrees.

3. The inertial angular sensor (2) according to one of the preceding claims, **characterised in that** each pair $P_i$ is symmetrical to at least one other pair $P_j$ (with $j \neq i$) with respect to at least one of the $S_1, S_2, S_3, S_4$ axes of symmetry of the resonator (1).

4. The inertial angular sensor (2) according to one of the preceding claims, **characterised in that** each spring (50) of each pair $P_i$ forms an alpha=90/N degree angle with at least two of the four $S_1, S_2, S_3, S_4$ axes of symmetry of the resonator (1).

5. The inertial angular sensor (2) according to one of claims 1 to 4, **characterised in that** the external mass (3.2) has a substantially square annular shape.

6. The inertial angular sensor (2) according to one of claims 1 to 5, **characterised in that** the masses (3.1) and (3.2) have the same axes of symmetry.

7. A method for correcting the stiffness of a resonator (1) integrated in an inertial angular sensor (2) according to one of claims 1 to 6, comprising the steps of:

- measurement of the vibration frequencies of the resonator (1) for different vibration orientations, using deformation sensors (12),
- determination, on the basis of these measurements, of the stiffness $K_U$ default of the resonator (1),
- calculation, from the stiffness $K_U$ default, of the tensions to be applied to a selection of springs (50),
- application of the calculated tensions on the selection of springs (50),
- repetition of the previous steps if the vibration frequency anisotropy of the resonator (1) is greater than a threshold frequency anisotropy value.

8. The method according to claim 7, **characterised in that** the threshold frequency anisotropy value is 1 Hz.

FIG.1

FIG.2

EP 3 615 889 B1

FIG.3

FIG.4

EP 3 615 889 B1

(10.2) FIG.6

(10.1) FIG.5

FIG.7

FIG.8

**RÉFÉRENCES CITÉES DANS LA DESCRIPTION**

**Documents brevets cités dans la description**

- FR 2983574
- US 2016341551 A1